# FASCICULE DE BREVET EUROPEEN

(11) **EP 0 298 180 B1**
(45) Date de publication et mention de la délivrance du brevet: **19.05.1993**
(21) Numéro de dépôt: 87401641.3
(22) Date de dépôt: 10.07.1987
(51) Int. Cl.: C14B 7/04, B32B 9/02

(54) **Procédé de fabrication d'une structure déployée dont la partie principale est en cuir et structure obtenue suivant ce procédé**
Verfahren zur Herstellung einer ausgebreiteten Struktur mit Leder als Hauptteil und so hergestellte Struktur
Process for making an open structure with leather as the main part, and structure thus made

(43) Date de publication de la demande: 11.01.1989
(73) Titulaire: Lesourd, Hugues, F-75116 Paris (FR)
(72) Inventeur: Lesourd, Hugues, F-75116 Paris (FR)
(74) Mandataire: Bruder, Michel

(56) Documents cités:
- DE-A- 2 124 779
- FR-A- 1 015 022
- FR-A- 2 004 766
- FR-A- 2 127 648
- US-A- 2 931 202

## Description

La présente invention concerne un procédé de fabrication d'une structure déployée dont la partie principale est en cuir et une structure obtenue suivant ce procédé.

On connaît déjà des structures déployées en treillis qui sont obtenues en découpant dans une plaque ou feuille cohérente des rangées parallèles de fentes, disposées de façon alternée entre deux rangées voisines, et en déployant ensuite la structure par traction dans un sens perpendiculaire à celui des fentes.

Les structures et leurs procédés de fabrication ont fait l'objet de plusieurs brevets qu'elles soient en métal comme décrit dans le brevet français FR-A-2 421 695, qu'elles soient en cuir comme décrit dans le brevet belge BE-A-531 033, qu'elles soient en mousse homogène ou revêtue comme décrit dans le brevet français FR-A-2 004 766, ou tout autre matière moulable comme décrit dans le brevet GB-A-1 422 640 dans lequel la possibilité de matrices en cuir est évoquée.

On connaît également des complexes dont l'élément supérieur est une structure déployée en cuir et dont l'élément inférieur n'est pas déployé, soit constituant une sous-couche plane, soit, de par sa nature, venant combler les vides laissés par le déployage, comme c'est le cas par exemple d'une fourrure, tel que décrit dans le brevet US-A-2931202.

On connaît aussi des complexes dont l'élément supérieur est une structure déployée revêtue de cuir et dont l'élément inférieur ou intermédiaire est déployé mais décalé par rapport à l'élément supérieur, tel que décrit dans le brevet français FR-A- 2 004 766 déjà cité.

On connaît d'autres complexes dont l'élément supérieur est constitué par une feuille de cuir simplement perforée mais non déployée et dont l'élément inférieur est une doublure en tissu, comme décrit dans le brevet français FR-A-1 015 022. La fabrication d'un tel complexe ne pose pas de problèmes particuliers car la feuille de cuir étant simplement perforée et non déployée reste dimensionnellement stable au cours de l'opération de doublage avec le tissu, ce qui permet de réaliser des pièces de grandes dimensions par simple dépose de peaux encollées et pressage sur la doublure support, elle-même de grande dimension.

Si l'on veut effectuer la même opération avec une feuille de cuir déployée et non perforée que l'on disposerait sur une laie de tissu, on se heurte à un certain nombre de difficultés qui ne permettent ni une fabrication de type industriel, ni d'obtenir un produit à l'aspect régulier. En effet, lorsque l'on déploie une feuille de cuir, l'élasticité naturelle du cuir tend à lui faire reprendre ses dimensions originelles et il n'est pas possible de procéder au collage ou à l'adhérence sur un support sans maintenir en permanence un effort de traction. On s'aperçoit alors que sous la traction, d'une part les lanières des mailles se redressent par rapport au plan moyen de la structure et que d'autre part il est pratiquement impossible d'obtenir des mailles régulières car l'élasticité d'une feuille de cuir, matériau naturel, n'est pas uniforme en tous ses points.

Le redressement des lanières a pour effet de ne pouvoir réaliser le collage ou l'adhérence sur un support que sur seulement une petite surface de la lanière, ce qui a pour conséquence de rendre fragile la cohésion du complexe, notamment lorsqu'il est soumis à des frottements répétés côté cuir déployé comme cela est le cas lors de l'utilisation comme revêtement de siège.

L'irrégularité de la dimension des mailles est un inconvénient si l'on veut utiliser le complexe dans un but esthétique. Cette irrégularité, déjà notoire sur une peau, se trouve encore plus visible lorsque l'on juxtapose deux peaux déployées côte à côte car les irrégularités ne sont jamais les mêmes d'une peau à l'autre. Or beaucoup d'utilisations de ce genre de complexe nécessitent l'utilisation de plusieurs peaux.

Le procédé proposé remédie à ces inconvénients, et il a l'avantage d'être simple et adapté aux équipements industriels existants.

A cet effet ce procédé de fabrication d'une structure déployée dont la partie principale est en cuir et dont les lanières sont situées dans un même plan et forment entre elles des mailles parfaitement régulières, caractérisé en ce qu'on double, avant déployage, les peaux ou feuilles de cuir avec une feuille mince constituant une sous-couche en matériau très peu élastique et suffisamment résistant pour supporter l'opération de déployage, autrement dit avec une feuille mince en matériau déployable sans retrait.

La feuille mince constituant la sous-couche peut être en métal, comme l'aluminium par exemple, ou en certaines matière plastiques comme le polypropylène le polyester orienté, le polyamide orienté etc.. par exemple. C'est ce complexe cuir/ sous-couche très peu élastique, qui peut ensuite être déployé avec le matériel généralement utilisé pour déployer le métal, permettant d'obtenir une structure à mailles très régulières aux configurations désirées.

Cependant comme le déployage en grande longueur a pour effet de redresser les lanières après étirage même avec le métal, il convient de faire passer ce complexe sous presse, entre deux cylindres par exemple, pour l'aplatir, comme souhaité. L'aplatissage peut se faire à froid pour une sous-couche métallique mais il doit se faire à chaud pour une sous-couche en matière plastique. Le complexe étant maintenu sous tension pour conserver l'ouverture des mailles, on peut le faire passer entre deux cylindres, par exemple, dont le cylindre inférieur, porté à la température de déformation de la matière plastique, est seul chauffé compte tenu du pouvoir isolant de la couche supérieure de cuir.

L'invention présente en plus l'avantage de pouvoir réaliser le déployage en continu et sur de grandes longueurs. Les peaux ou feuilles de cuir pouvant être déposées et collées les unes à la suite des autres sur la feuille support, elle-même livrée en rouleaux de grande longueur, le complexe obtenu peut être ensuite enroulé sur des bobines qui sont par la suite placées en amont des machines à déployer.

Cela présente l'avantage d'une part de réduire le coût du déployage, qui peut se faire en continu, et d'autre par de pouvoir livrer aux utilisateurs des rouleaux de cuir déployé en grande longueur, ce qui permet de le découper aux dimensions désirées comme d'envisager un dépôt et collage en continu sur un support de base comme un tissu de couleur pour obtenir un effet esthétique.

Des modes particuliers de réalisation du procédé selon l'invention sont indiqués dans les revendications 2-5.

L'invention concerne aussi une structure déployée à base de cuir obtenue par ce procédé selon l'invention indiquée dans la revendication 6.

On décrira ci-après,à titre d'exemples non limitatifs, diverses formes d'exécution de la présente invention,en référence au dessin annexé sur lequel :
La figure 1 est un schéma illustrant la première phase du procédé suivant l'invention à savoir le doublage des peaux de cuir avant déployage.
La figure 2 est un schéma illustrant la seconde phase du procédé à savoir l'opération complète de déployage du complexe.
La figure 3 est une vue en perspective schématique d'une peau de cuir déployée avec sa doublure.
La figure 4 est une vue en coupe faite suivant la ligne IV-IV de la figure 3.
Les figures 5 et 6 sont des schémas illustrant une variante de mise en oeuvre du procédé.

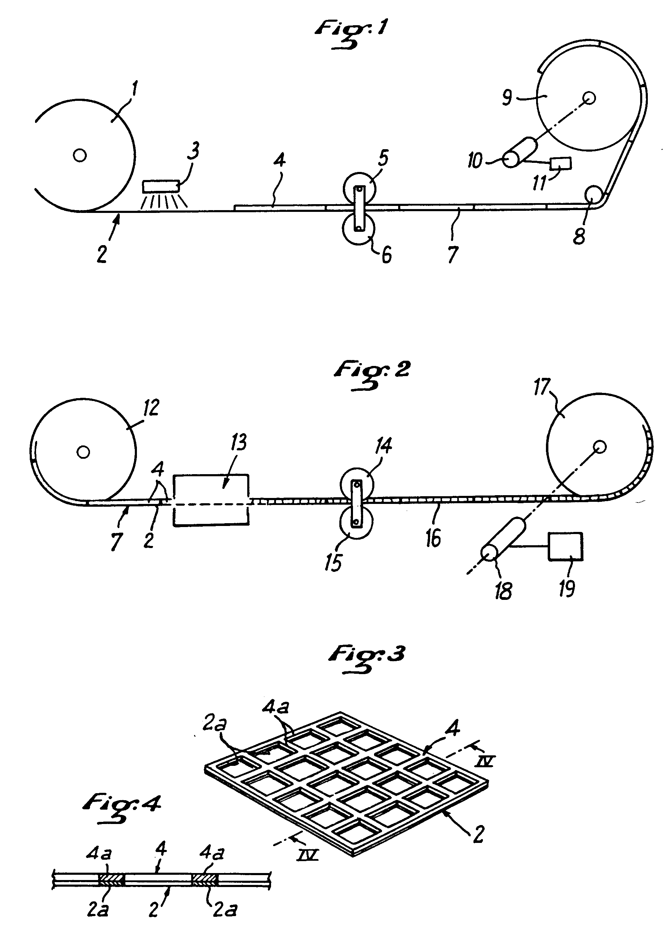

La figure 1 représente la première phase du procédé suivant l'invention, à savoir l'opération de doublage. Une sous-couche 2 est déroulée, sous forme de bande, à partir d'un dévidoir 1, elle est ensuite encollée sur sa face supérieure en passant sous un dispositif d'encollage 3. On dépose ensuite des peaux de cuir 4, préalablement découpées aux mêmes dimensions, sur la bande 2 de la sous-couche déroulée et l'assemblage passe immédiatement après entre une paire de rouleaux superposés 5 et 6.

On obtient ainsi un complexe 7 à forte adhérence qui passe sur un rouleau de renvoi 8 puis s'enroule sur une bobine 9 entraînée en rotation par un moteur 10 piloté par un dispositif de commande 11 relié au poste de dépose des peaux.

La figure 2 représente la seconde phase du procédé suivant l'invention, à savoir l'opération complète de déployage du complexe 7 déroulé à partir d'un dévidoir 12 qui passe d'abord à travers une station de déployage 13, de manière à former une structure en treillis, puis immédiatement après entre une paire de rouleaux presseurs 14 et 15 dont le rouleau inférieur 15 peut être chauffé, pour fixer les dimensions de la structure déployée. On obtient ainsi un complexe déployé à plat 16 qui s'enroule sur une bobine 17 entraînée en rotation par un moteur 18 piloté par un dispositif d'asservissement 19.

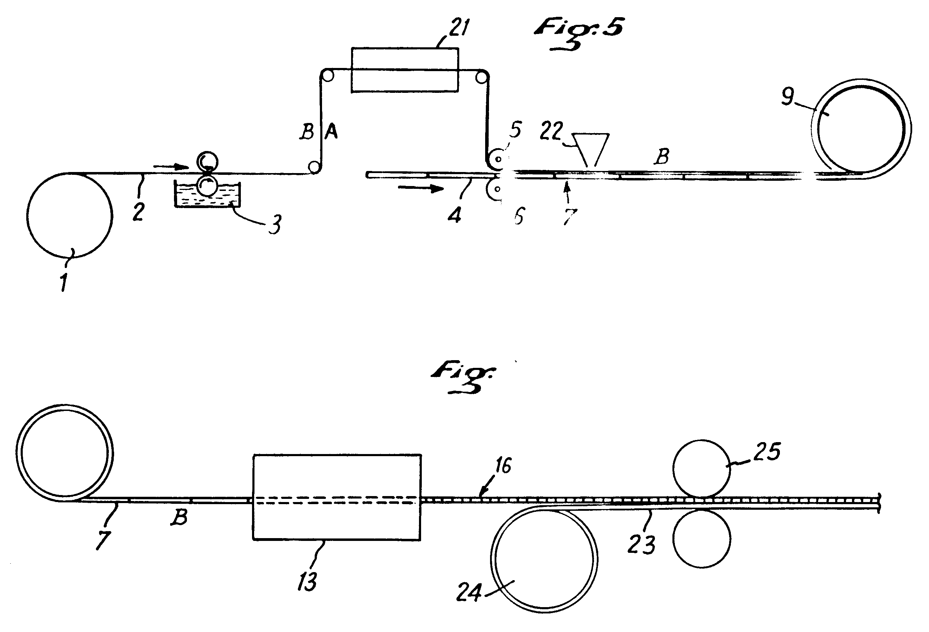

Les figures 3 et 4 représentent une peau de cuir 4 déployée avec sa doublure 2. Les lanières 4a de cette peau 4 sont situées dans un même plan et forment entre elles des mailles parfaitement régulières, chaque lanière étant accolée à une lanière sous-jacente de même largeur 2a, faisant partie de la sous-couche 2.

Dans la variante d'exécution de l'invention représentée sur les figures 5 et 6 la sous-couche 2 est constituée par un film plastique nu et qui est encollé, sur sa face inférieure A, en passant à travers un dispositif d'encollage 3. On fait ensuite passer le film plastique 2, encollé sur sa face inférieure A, à travers un tunnel d'évaporation du solvant 21 dont il ressort avec un dépôt de colle puissante sur sa face A. C'est devant cette face encollée A qu'on présente les peaux de cuir 4 préalablement découpées aux mêmes dimensions que le film plastique 2. On fait passer ensuite l'assemblage à travers une paire de rouleaux presseurs 5,6 destinés à réaliser l'adhérence entre les peaux 4 et la face encollée A du film plastique 2. A la sortie des rouleaux presseurs 5,6 le complexe 7 constitué par le film plastique 2 et les peaux 4 qui y adhèrent, passe en dessous d'un dispositif 22 qui réalise le préencollage de la face supérieure B du film plastique 2 avec une colle "HM" (Hot Melt), à une température de 150-160°C. Cette colle sera par la suite réactivée pour permettre le collage sur un tissu, comme il sera décrit plus loin. Le complexe ainsi formé et traité est enroulé sur une bobine et il est stocké à la température ordinaire, pendant une période de quelques jours, pour permettre le réticulage de la colle.

Ensuite, les peaux 4 ayant été doublées de la manière illustrée sur la figure 5, on procède au déployage du complexe 7 constitué par les peaux 4 adhérant au film plastique 2. Ce déployage a lieu lors du passage à travers une station de déployage 13. Les peaux déployées 7a sortant de la station 13 restent ouvertes grâce à la non élasticité de la matière plastique formant support qui a été choisie en conséquence. Les peaux ainsi doublées et déployées, formant le complexe 16, sont ensuite collées sur une bande de tissu 23 déroulée à partir d'une bobine 24. A cet effet on fait passer le complexe déployé 16, conjointement avec la bande de tissu 23 appliquée contre la face encollée B du complexe déployé 16, à travers une calandre 25 chauffée à une température de 120°C environ, de manière à réactiver la colle prédéposée sur la face B.

Dans le cas d'une fabrication industrielle il est préférable de coller le tissu 23 au complexe déployé 16, tout de suite après le déployage. En effet l'expérience a montré que si l'on attend trop longtemps après le déployage, l'élasticité naturelle du cuir que tend à refermer les mailles, arrive à vaincre la non élasticité du plastique support.

## Revendications

1. Procédé de fabrication d'une structure déployée dont la partie principale est en cuir et dont les lanières sont situées dans un même plan et forment entre elles des mailles parfaitement régulières, caractérisé en ce qu'on double, avant déployage, les peaux ou feuilles de cuir (4) avec une feuille mince constituant une sous-couche (2) en matériau très peu élastique et suffisamment résistant pour supporter l'opération de déployage, autrement dit avec une feuille mince en matériau déployable sans retrait.

2. Procédé suivant la revendication 1 caractérisé en ce qu'après l'opération de déployage, on procède à une opération de pressage à froid pour aplanir les lanières.

3. Procédé suivant la revendication 1 caractérisé en ce qu'après l'opération de déployage, on procéde à une opération de pressage avec chauffage de la sous-couche (2).

4. Procédé suivant l'une quelconque des revendications précédentes caractérisé en ce qu'on débite la sous-couche (2) sous forme de bande continue à partir d'une bobine (1), on colle sur cette bande (2) les peaux (4) les unes à la suite des autres, on déploie ensuite la bande complexe (7) formée de la sous-couche (2) et des peaux (4) juxtaposées longitudinalement (4), de manière à former une structure en treillis et on presse cette bande complexe (7) pour fixer les dimensions de la structure déployée.

5. Procédé suivant la revendication 4 caractérisé en ce qu'on encolle la face inférieure (A) d'une sous-couche (2) constituée par un film plastique nu en le faisant passer à travers un dispositif d'encollage (3), on fait ensuite passer le film plastique (2), encollé sur sa face inférieure (A), à travers un tunnel d'évaporation du solvant (21) dont il ressort avec un dépôt de colle puissante sur sa face (A) devant laquelle on présente les peaux de cuir (4) préalablement découpées aux mêmes dimensions que le film plastique (2), on fait passer ensuite l'assemblage à travers une paire de rouleaux presseurs (5,6) destinés à réaliser l'adhérence entre les peaux (4) et la face encollée (A) du film plastique (2), à la sortie des rouleaux presseurs (5,6) on fait passer le complexe (7) constitué par le film plastique (2) et les peaux (4) qui y adhèrent, en dessous d'un dispositif (22) qui réalise le préencollage de la face supérieure (B) du film plastique (2) avec une colle du type "Hot Melt", à une température de 150-160°C, on enroule le complexe (7) ainsi formé et traité sur une bobine et on le stocke à la température ordinaire, pendant une période de quelques jours, pour permettre le réticulage de la colle, ensuite, on procède au déployage du complexe (7) constitué par les peaux(4) adhérant au film plastique (2), par passage à travers une station de déployage (13), et on colle ensuite les peaux ainsi doublées et déployées (16) sur une bande de tissu (23) déroulée à partir d'une bobine (24) en faisant passer le complexe déployé (16), conjointement avec la bande de tissu (23) appliquée contre la face encollée (B) du complexe déployé, à travers une calandre (25) chauffée à une température de 120°C environ, de manière à réactiver la colle prédéposée sur la face (B).

6. Structure déployée à base de cuir obtenue par le procédé suivant l'une quelconque des revendications 1 à 5.

## Claims

1. Process for making an open structure with leather as the main part and of which the straps are located in the same plane and form therebetween perfectly regular meshes, characterized in that, before opening out, the skins or sheets of leather (4) are lined with a thin sheet constituting a sub-layer (2) of material which is hardly elastic and sufficiently resistant to withstand the opening-out operation, in other words with a thin sheet of material able to open out without shrinkage.

2. Process according to Claim 1, characterized in that, after the opening-out operation, one proceeds with a cold-pressing operation to flatten the straps.

3. Process according to Claim 1, characterized in that, after the opening-out operation, one proceeds with a pressing operation with heating of the sub-layer (2).

4. Process according to any one of the preceding Claims, characterized in that the sub-layer (2) is delivered in the form of a continuous web from a reel (1), the skins (4) are glued on this web (2) one after the other, the complex web (7) formed by the sub-layer (2) and the skins (4) juxtaposed longitudinally (4) is then opened out so as to form a trellis structure and this complex web (7) is pressed to fix the dimensions of the open structure.

5. Process according to Claim 4, characterized in that the lower face (A) of a sub-layer (2) constituted by a bare plastic film is sized by causing it to pass through a sizing device (3), the plastic film (2), sized on its lower face (A), is then made to pass through a solvent evaporation tunnel (21) from which it emerges with a deposit of powerful glue on its face (A) in front of which are offered the leather skins (4) previously cut out to the same dimensions as the plastic film (2), the assembly is then passed through a pair of presser rollers (5, 6) intended to effect adherence between the skins (4) and the sized face (A) of the plastic film (2), on leaving the presser rollers (5, 6), the complex (7) constituted by the plastic film (2) and the skins (4) which adhere thereto is passed beneath a device (22) which effects pre-sizing of the upper face (B) of the plastic film (2) with a glue of the "Hot Melt" type, at a temperature of 150-160°C, the complex (7) thus formed and treated is wound on a reel and it is stored at ambient temperature, for a period of some days, to allow cross-linking of the glue, then one proceeds with opening out the complex (7) constituted by the skins (4) adhering to the plastic film (2), by passage through an opening-out station (13), and the skins thus lined and open (16) are then glued on a web of fabric (23) unwound from a reel (24), passing the open complex (16), jointly with the web of fabric (23) applied against the sized face (8) of the open complex, through a calender (25) heated to a temperature of about 120°C, so as to reactivate the glue pre-deposited on the face (B).

6. Open structure based on leather obtained by the process according to any one of Claims 1 to 5.

## Patentansprüche

1. Verfahren zur Herstellung einer verstreckten Struktur, deren Hauptteil aus Leder besteht und deren Stege in derselben Ebene angeordnet sind und miteinander völlig regelmäßige Maschen bilden, **dadurch gekennzeichnet**, daß man die Häute oder Lederlagen (4) vor dem Verstrecken mit einer dünnen Folie als Unterlage (2) kaschiert, die aus sehr wenig elastischem und ausreichend widerstandsfähigem Material, um den Verstreckungsprozeß auszuhalten, besteht, anders ausgedrückt mit einer dünnen Lage aus ohne Rücksprung verstreckbarem Material.

2. Verfahren nach Anspruch 1, **dadurch gekennzeichnet**, daß man nach dem Verstrecken eine Kaltpressung durchführt, um die Stege einzuebnen.

3. Verfahren nach Anspruch 1, **dadurch gekennzeichnet**, daß nach dem Verstrecken ein Preßvorgang mit Erwärmen der Unterlage (2) durchgeführt wird.

4. Verfahren nach einem der vorhergehenden Ansprüche, **dadurch gekennzeichnet**, daß die Unterlage (2) als Endlosbahn von einer Rolle (1) abgewickelt wird, Lederstücke (4) nacheinander auf diese Bahn (2) geklebt werden, dann die zusammengesetzte Bahn (7), die aus der Unterlage (2) und den in Längsrichtung aneinanderstoßenden Lederstücken (4) besteht, derart verstreckt wird, daß eine Gitterstruktur entsteht und diese zusammengesetzte Bahn (7) gepreßt wird, um die Maße der verstreckten Struktur zu fixieren.

5. Verfahren nach Anspruch 4, **dadurch gekennzeichnet**, daß man die Unterseite (A) einer Unterlage aus einer bloßen Kunststoffolie mit Kleber versieht, indem man sie durch eine Kleberauftragevorrichtung (3) führt; danach die auf ihrer Unterseite (A) mit Kleber versehene Kunststoffolie (2) durch einen Verdampfungstunnel (21) für Lösungsmittel führt, den sie mit einer kräftigen Kleberschicht auf ihrer Seite (A) verläßt, der die vorher auf dieselben Maße wie die der Kunststoffolie (2) zugeschnittene Lederstücke (4) dargeboten werden; dann das Ganze durch ein Paar Preßrollen (5, 6) geführt wird, um die Haftung zwischen den Lederstücken (4) und der mit Kleber versehenen Seite (A) der Kunststoffolie (2) zu bewirken; am Ausgang der Preßrollen (5, 6) die aus der Kunststoffolie (2) und den aufgeklebten Lederstücken (4) zusammengesetzte Bahn unter einer Vorrichtung (22) durchgeführt wird, durch die obere Seite (B) der Kunststoffolie (2) mit einem Kleber vom Schmelzklebertyp bei einer Temperatur von 150-160°C versehen wird; dann die so gebildete und behandelte zusammengesetzte Bahn (7) auf eine Rolle aufgerollt und bei gewöhnlicher Temperatur für eine Zeit von einigen Tagen aufbewahrt wird, um die Vernetzung des Klebers zu erlauben; die Bahn (7) aus den auf der Kunststoffolie (2) klebenden Lederstücken (4) zur Verstreckung durch eine Verstreckungsvorrichtung (13) geführt wird; die so kaschierten und verstreckten Lederstücke (16) dann auf eine Stoffbahn (23) geklebt werden, die von einer Rolle (24) abgerollt wird, wobei das verstreckte Verbundmaterial (16) zusammen mit der Stoffbahn (23), die an die mit Kleber vorbehandelte Seite (B) des verstreckten Verbundmaterials angelegt ist, durch einen auf etwa 120°C erwärmten Kalander (25) geführt wird, um den vorab auf die genannte Seite (B) aufgebrachten Kleber zu reaktivieren.

6. Verstreckte Struktur auf Lederbasis hergestellt durch ein Verfahren gemäß einem der Ansprüche 1 bis 5.
